# EUROPÄISCHE PATENTSCHRIFT

(11) **EP 3 977 430 B1**
(45) Veröffentlichungstag und Bekanntmachung des Hinweises auf die Patenterteilung: **29.01.2025**
(21) Anmeldenummer: 20727261.8
(22) Anmeldetag: 19.05.2020
(51) Int. Cl.: G08B 29/18, G08B 17/10, G08B 17/12

(54) **VERFAHREN UND VORRICHTUNG ZUR DETEKTION VON RAUCH**
METHOD AND APPARATUS FOR DETECTING SMOKE
PROCÉDÉ ET DISPOSITIF DE DÉTECTION DE FUMÉE

(30) Priorität: 27.05.2019 DE 102019207711
(43) Veröffentlichungstag der Anmeldung: 06.04.2022
(73) Patentinhaber: Robert Bosch GmbH, 70442 Stuttgart (DE)
(72) Erfinder: WELLHAUSEN, Andreas, 30625 Hannover (DE)
(86) Internationale Anmeldenummer: PCT/EP2020/063957
(87) Internationale Veröffentlichungsnummer: WO 2020/239540

(56) Entgegenhaltungen:
- JP-A- 2018 101 317
- FILONENKO ALEXANDER ET AL: "Smoke Detection on Video Sequences Using Convolutional and Recurrent Neural Networks", 7 September 2017, SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 558 - 566, ISBN: 978-3-540-74549-5, XP047475417
- FILONENKO ALEXANDER ET AL: "Smoke Detection on Video Sequences Using Convolutional and Recurrent Neural Networks", 7 September 2017, ANNUAL INTERNATIONAL CONFERENCE ON THE THEORY AND APPLICATIONS OF CRYPTOGRAPHIC TECHNIQUES, EUROCRYPT 2018; [LECTURE NOTES IN COMPUTER SCIENCE; LECT.NOTES COMPUTER], SPRINGER, BERLIN, HEIDELBERG, PAGE(S) 558 - 566, ISBN: 978-3-642-17318-9, XP047475218
- LUO SHENG ET AL: "A Slight Smoke Perceptual Network", IEEE ACCESS, vol. 7, 10 April 2019 (2019-04-10), pages 42889 - 42896, XP011719402, DOI: 10.1109/ACCESS.2019.2906695
- HU CHAO ET AL: "Real-Time Fire Detection Based on Deep Convolutional Long-Recurrent Networks and Optical Flow Method", 2018 37TH CHINESE CONTROL CONFERENCE (CCC), TECHNICAL COMMITTEE ON CONTROL THEORY, CHINESE ASSOCIATION OF AUTOMATION, 25 July 2018 (2018-07-25), pages 9061 - 9066, XP033414285, DOI: 10.23919/CHICC.2018.8483118
- HAN JISEONG ET AL: "Predictive Models of Fire via Deep learning Exploiting Colorific Variation", 2019 INTERNATIONAL CONFERENCE ON ARTIFICIAL INTELLIGENCE IN INFORMATION AND COMMUNICATION (ICAIIC), IEEE, 11 February 2019 (2019-02-11), pages 579 - 581, XP033531860, DOI: 10.1109/ICAIIC.2019.8669042

## Beschreibung

Die Erfindung betrifft ein maschinelles Lernsystem mit einem speziellen rekurrenten Modul zur Detektion von Rauch und ein Verfahren zur Detektion von Rauch mit diesem maschinellen Lernsystem.

### Stand der Technik

Aus der DE 10 2014 216 644 A1 ist ein Verfahren zur Branderkennung bekannt. Über Kameras, die zu überwachende Bereiche beobachten, werden die von den Kameras ausgegebenen Bilder mittels digitaler Bildverarbeitung auf das Auftreten von Brandmerkmalen, wie zum Beispiel Flammen, Rauchsäulen, etc. geprüft.

Die Autoren Xingjian et al. offenbaren in der Veröffentlichung "Convolutional LSTM network: A machine learning approach for precipitation nowcasting." Advances in neural information processing systems*,* ein faltendes LSTM (engl. Convolutional LSTM, kurz ConvLSTM).

JP 2018 101317 A offenbart ein System zur Überwachung von Anomalien.

FILONENKO ALEXANDER ET AL: "Smoke Detection on Video Sequences Using Convolutional and Recurrent Neural Networks", 7. September 2017 (2017-09-07), ANNUAL INTERNATIONAL CONFERENCE ON THE THEORY AND APPLICATIONS OF CRYPTOGRAPHIC TECHNIQUES, EUROCRYPT 2018; [LECTURE NOTES IN COMPUTER SCIENCE; LECT.NOTES COMPUTER], SPRINGER, BERLIN, HEIDELBERG, PAGE(S) 558 - 566, XP047475218, ISBN: 978-3-642-17318-9 offenbaren eine Kombination aus einem neuronalen Faltungsnetzwerk (CNN) und einem rekurrenten neuronalen Netzwerk (RNN), um den Rauch im Raum- und Zeitbereich zu erkennen.

### Offenbarung der Erfindung

In einem ersten Aspekt der Erfindung wird eine spezielles maschinelles Lernsystem, insbesondere ein neuronales Netz, vorgeschlagen, welches sowohl ein Kurzzeitgedächtnis, als auch ein Langzeitgedächtnis besitzt. Das hat den Vorteil, dass das maschinelle Lernsystem globale Informationen aus dem Bild, insbesondere aus welchem Bildbereich eine räumlich relevante Information ursprünglich stammt, und zeitliche, lokale Informationen, wie lokale Objektverschiebungen in mehreren aufeinander folgende Bilder extrahieren und verarbeiten kann. Dadurch kann das maschinelle Lernsystem besonders gut lokale dynamische Texturen, die für Rauch charakteristisch sind, extrahieren. Daher lässt sich mit diesem maschinellen Lernsystem besonders zuverlässig Rauch detektieren. Gemäß Anspruch 1 umfasst das maschinelle Lernsystem ein faltendes LongShortTermMemory-Modul.

Das maschinelle Lernsystem des ersten Aspektes der Erfindung ist derart parametrisiert, dass dieses abhängig von einer Mehrzahl von, insbesondere unmittelbar, nacheinander erfassten Bildern jeweils innerhalb der Bilder Rauch detektiert. Das maschinelle Lernsystem ist dadurch gekennzeichnet, dass dieses ein faltendes rekurrentes neuronales Netz (engl. convolutional recurrent neural network (ConvRNN)), nämlich ein faltendes LongShortTermMemory-Modul (engl. convolutional LSTM, im Folgenden als ConvLSTM bezeichnet), umfasst.

Für eine videobasierte Erkennung von Rauch können Bildverarbeitungsmethoden wie Farb- oder Bewegungsdetektion, Texturanalysen verwendet werden. Ferner kann Rauch auch abhängig von einem ermittelten optischen Fluss einer Videoaufnahme detektiert werden. Rauch wird hierbei anhand seines typischerweise aufwärtsgerichteten Bewegungsverhaltens detektiert. Jedoch muss der Rauch hierfür hinreichend dicht sein, um eine Bewegung durch den optischen Fluss festzustellen zu können. Außerdem muss die typische Rauchbewegung ausreichend lange auftreten, um sicherzustellen, dass es sich um Rauch und um kein anderes Objekt handelt.

Der Vorteil ist, dass eine Rauchdetektion bereitgestellt wird, die eine geringe Fehlalarmrate aufweist, ohne dabei die Detektionsrate zur vermindern. Ferner kann die Rauchdetektion auch unter speziellen Anforderungen wie in Tunnels, Häfen oder Landebahnen zuverlässig durchgeführt werden.

Ein weiterer Vorteil ist, dass langsam bewegte Objekte, wie Rolltreppen zu keinen Fehlalarmen führen. Diese Objekte können bei Rauchdetektionen mittels des optischen Flusses zu Fehlalarmen führen, weil diese im optischen Fluss nicht von Rauch unterschieden werden können.

Der Vorteil des ConvRNN, insbesondere des ConvLSTM, ist, dass dieses Zeitinformationen und globale Informationen des Bildes gemeinsam verarbeitet. Dies ist für eine Detektion von Rauch wichtig, da Rauch typischerweise durch lokale, dynamische Texturen charakterisiert ist, die sich deshalb besonders gut mit dem Conv-RNN/-LSTM extrahieren lassen. Eine vergleichbare Zuverlässigkeit und Genauigkeit lässt sich nicht durch eine Kombination von faltenden neuronalen Netzen (engl. convolutional neural networks) und rekurrenten neuronalen Netzwerken (engl. recurrent neural networks) erreichen. Denn ein maschinelles Lernsystem aus diesen zwei unterschiedlichen Typen von neuronalen Netzen ist nicht in der Lage, die entscheidenden zeitlichen und globalen Informationen aus den Bildern gleichzeitig zu extrahieren und zu verarbeiten. Da jedoch das maschinelle Lernsystem des ersten Aspektes in der Lage ist, zeitliche und globale Informationen gemeinsam zu verarbeiten, liefert dieses maschinelle Lernsystem bei einer Rauchdetektion besonders zuverlässige und genaue Ergebnisse.

Unter einem ConvLSTM wird ein spezielles LSTM verstanden, welches in dem Dokument der Autoren Xingjian et al. gezeigt ist. Bei einem (Conv-)LSTM werden abhängig von drei Eingangsgrößen zwei Ausgangsgrößen ermittelt. Eine erste der Eingangsgrößen kann die Ausgangsgröße der unmittelbar vorhergehenden Schicht des (Conv-)LSTM sein, während die weiteren zwei Eingangsgrößen ermittelte Ausgangsgrößen einer, insbesondere unmittelbar, vorhergehenden, Berechnung des (Conv-)LSTM sein können. Eine erste der Ausgangsgrößen kann die Ausgangsgröße des (Conv-)LSTM sein, welche an eine, insbesondere unmittelbar, nachfolgende Schicht des maschinellen Lernsystems weitergeleitet wird. Die zweite Ausgangsgröße ist eine Größe, die einen internen Zustand des (Conv-)LSTM charakterisiert. Bei einem ConvLSTM wird eine Filterung der ersten Eingangsgröße und der ersten Ausgangsgröße der vorhergehenden Berechnung des ConvLSTM durchgeführt. D.h. das ConvLSTM unterscheidet sich zu dem "normalen" LSTM darin, dass anstatt Skalarmultiplikationen nun eine Faltung seiner Eingangsgröße jeweils mit zumindest einem Filter ausführt wird. Es sei angemerkt, dass die Ergebnisse der Filterung der beiden Eingangsgrößen des ConvLSTM anschließend aufsummiert werden und mittels einer Aktivierungsfunktion verarbeitet werden können. Denkbar ist, dass eine Mehrzahl von unterschiedlichen Filtern verwendet werden. Denkbar ist ferner, dass die Ergebnisse der Mehrzahl der Filterungen aufsummiert werden, bevor diese aufsummierten Ergebnisse dann jeweils mittels der Aktivierungsfunktion(en) verarbeitet werden. Die Ausgangsgrößen der ConvLSTM werden abhängig von den Ergebnissen der Aktivierungsfunktionen ermittelt. Für eine math. Definition des ConvLSTM, siehe Gleichung (3) des Dokuments der Autoren Xingjian et al.

Es sei angemerkt, dass beim Verarbeiten der Bilder durch das maschinelle Lernsystem, diese jeweils durch das faltende rekurrente neuronale Netz verarbeitet werden. Ferner sei angemerkt, dass die Detektion des Rauches abhängig von einer ermittelten Ausgangsgröße des faltenden rekurrenten neuronalen Netzes ausgegeben wird.

Das betrachtete Zeitfenster der Mehrzahl der erfassten Bilder beträgt vorzugsweise zwischen einer Sekunde bis drei Sekunden. Bisherige Ansätze sind bei solchen kurzen Zeitfenstern nicht in der Lage, dünnen Rauch zu detektieren.

Unter parametrisiert wird verstanden, dass das maschinelle Lernsystem eingerichtete ist, Rauch zu detektieren. Unter parametrisiert kann ferner verstanden werden, dass Parameter des maschinellen Lernsystems Werte aufweisen, sodass das maschinelle Lernsystem innerhalb der Bilder Rauch detektiert, bzw. ob die Bilder Rauch enthalten. Vorzugsweise wurden die Werte der Parameter bei einem Anlernen des maschinellen Lernsystems angepasst, sodass das maschinelle Lernsystem Rauch detektiert.

Unter Rauch kann ein Gemisch aus einer festen in einer gasförmigen Phase verstanden werden. Unter Rauch kann ferner ein durch Verbrennung entstehendes Aerosol in feinstverteilter Form aus Partikeln, wie Staub- oder Asche-partikel und /oder Flüssigkeitströpfchen (Wasser, Öldämpfe, Säuredämpfe, flüssige Verbrennungsrückstände), insbesondere im Abgas enthalten, verstanden werden.

Es wird vorgeschlagen, dass das maschinelle Lernsystem des Weiteren derart parametrisiert ist, dass dieses eine Ausgangsgröße ausgibt, die charakterisiert, ob Rauch innerhalb des jeweiligen mittels des maschinellen Lernsystem verarbeiteten Bildes abgebildet ist. Unter charakterisieren kann ein Klassifizieren der Bilder verstanden werden. Vorzugsweise charakterisiert die Größe zusätzlich, eine Position innerhalb des Bildes, an welcher der Rauch detektiert wurde. Z.B. charakterisiert die Größe zusätzlich eine "bounding-box", die den detektierten Rauch umrandet.

Weiterhin wird vorgeschlagen, dass das maschinelle Lernsystem derart parametrisiert ist, dass das maschinelle Lernsystem eine Matrix als Ausgangsgröße ausgibt. Die Einträge der Matrix sind jeweils einem Ausschnitt einer Mehrzahl von Ausschnitten innerhalb des verarbeiteten Bildes mittels des maschinellen Lernsystem zugeordnet. Die Einträge der Matrix charakterisieren, ob Rauch innerhalb dieses zugeordneten Abschnittes abgebildet ist. Der Vorteil hierbei ist, dass eine Lokalisation des Rauchs innerhalb des Bilder erzielt wird.

Weiterhin wird vorgeschlagen, dass die Ausgangsgröße, bzw. die Einträge der Matrix jeweils eine Wahrscheinlichkeit charakterisieren. Denkbar ist auch, dass das maschinelle Lernsystem parametrisiert, insbesondere eingerichtet, ist, den Rauch innerhalb des Bildes zu segmentieren.

Weiterhin wird vorgeschlagen, dass das maschinelle Lernsystem eine Mehrzahl von hintereinander geschalteten ConvLSTM umfasst. Eine Anzahl von Filtern, die das jeweilige ConvLSTM umfasst, nimmt mit zunehmender Tiefe des maschinellen Lernsystems zu und insbesondere eine Auflösung des verarbeiteten Bildes nimmt mit zunehmender Tiefe des maschinellen Lernsystems ab. Zwischen den ConvLSTM ist jeweils eine Verwerfungsschicht (engl. pooling-layer) zwischengeschaltet. Das letzte ConvLSTM ist mit einem vollvermaschten neuronalen Netz (engl. fully connected neural network) verbunden, welches die Ausgangsgröße des maschinellen Lernsystem ausgibt. Als Eingangsgröße erhält das neuronalen Netz eine ermittelte Ausgangsgröße des letzten ConvLSTM.

Unter einer Verwerfungsschicht kann verstanden werden, dass diese Schicht Informationen aus seiner Eingangsgröße entfernt, insbesondere jeweils innerhalb eines Ausschnittes einer Mehrzahl von Ausschnitten dieser Eingangsgröße. Die Verwerfungsschicht kann ein sog. average-pooling oder ein max-pooling ausführen.

Es sei angemerkt, dass das vollvermaschte neuronale Netz als ein sog. Klassifizierer und Lokalisierer (engl. "classifiyer and localizer") fungieren kann. Vorzugsweise werden als Aktivierungsfunktionen in diesem neuronalen Netz Sigmoid Funktionen und bei den Conv-RNN/-LSTM werden tanh und Hard-Sigmoid-Aktivierungsfunktionen verwendet.

Weiterhin wird vorgeschlagen, dass anstatt dem vollvermaschten neuronalen Netz ein sog. schnelles faltendes rekurrentes neuronales Netz (engl. fast R-CNN), insbesondere ein "Regionen-vorschlagendes" neuronales Netz (engl. region proposal network (RPN)), verwendet wird. Der Vorteil hierbei ist, dass flexibler Rauch innerhalb des Bildes lokalisiert werden kann.

Unter der Tiefe des maschinellen Lernsystems kann eine Position innerhalb der Abfolge der ConvLSTM des maschinellen Lernsystems relativ zu demjenigen ConvLSTM verstanden werden, welches die Eingangsgröße des maschinellen Lernsystems erhält.

Weiterhin wird vorgeschlagen, dass das maschinelle Lernsystem mit einem optischen, visuellen und/oder akustischen Warnmelder, wie ein Rauch-/Brand-melder, verbunden ist. Denkbar ist auch, dass das maschinelle Lernsystem ein Teil einer Brandmeldeanlage ist, die vorzugsweise mit einem Gebäudemanagementsystem verbunden ist. Denkbar ist ferner, dass das maschinelle Lernsystem mit einer Sicherheitsleitstelle, bspw. über das Internet oder ein Intranet, verbunden ist. Zusätzlich oder alternativ kann eine Mehrzahl von Kameras jeweils mit dem maschinellen Lernsystem verbunden sein, und die maschinellen Lernsysteme sind über ein Netzwerk mit der Brandmeldeanlage, und/oder der Sicherheitsleitstelle verbunden. Alternativ oder zusätzlich wird ein Alarm oder eine Alarmentscheidung, die abhängig von dem detektierten Rauch ermittelt. Denkbar ist, dass der Alarm oder die Alarmentscheidung über das Netzwerk zu Brandmeldeanlage, und/oder der Sicherheitsleitstelle übertragen wird.

Denkbar ist auch, dass der Alarm oder die Alarmentscheidung zu einer zentralen Überwachungsstelle weitergeleitet wird und durch einen Menschen gegenprüft wird. Zusätzlich oder alternativ kann eines der Bilder mit dem mittels des maschinellen Lernsystem detektierten Rauch und/oder mit dem ermittelten Alarm(-region) an die Überwachungsstelle übertragen werden.

Das maschinelle Lernsystem kann in der Kamera integriert sein, oder auf einem Server in einem lokalen oder globalen Netzwerk, mit dem die Kameras eines Gebäudes verbunden sind, betrieben werden.

Vorteilhaft hierbei ist, dass die Alarmentscheidung in Abhängigkeit von allen vorherigen Bildern, die durch das maschinelle Lernsystem propagiert wurden, getroffen wird. So gehen z.B. bei einer Alarmentscheidung bereits nach dem dritten Bild bereits drei Bilder in die Alarmentscheidung ein und bei einer Alarmentscheidung nach dem 42-sten Bild gehen insgesamt 42 Bilder in die Alarmentscheidung ein.

Weiterhin wird vorgeschlagen, dass das ein Eingang des maschinellen Lernsystems mit einer Kamera verbunden ist. Unter verbunden kann hier verstanden werden, dass die Bilder, die durch die Kamera erfasst wurden, dem maschinellen Lernsystem als jeweils eine Eingangsgröße bereitgestellt werden. Wobei die Kamera die Mehrzahl der Bilder erfasst und die Bilder nacheinander jeweils als eine Eingangsgröße bereitstellt. Die Kamera kann eine Bild-/Video-/Infrarot- und/oder eine Event-based-Kamera sein.

In einem zweiten Aspekt der Erfindung wird ein, insbesondere computerimplementiertes, Verfahren zur Detektion von Rauch innerhalb eines Bildes mittels des maschinellen Lernsystems vorgeschlagen. Das maschinelle Lernsystem ist das maschinelle Lernsystem gemäß dem ersten Aspekt der Erfindung. Das maschinelle Lernsystem umfasst eine Mehrzahl von Schichten, die nach einer vorgegebenen Reihenfolge verbunden sind und wenigstens eine der Schichten umfasst das Conv-RNN oder ConvLSTM. Das Verfahren umfasst die Schritte: Erhalten einer Mehrzahl von, insbesondere unmittelbar, nacheinander erfassten Bildern. Daraufhin folgt ein Propagieren der Mehrzahl der erfassten Bilder nacheinander durch das maschinelle Lernsystem. Beim Propagieren werden die Bilder sukzessive durch die Schichten des maschinellen Lernsystems verarbeitet und die letzte Schicht der Reihenfolge der Schichten gibt die Ausgangsgröße des maschinellen Lernsystems aus. Es sei angemerkt, dass die letzte Schicht parametrisiert ist, die Ausgangsgröße des maschinellen Lernsystems auszugeben. Die Ausgangsgröße charakterisiert, ob Rauch innerhalb des Bildes abgebildet ist. Ferner sei angemerkt, dass abhängig von der Ausgangsgröße des maschinellen Lernsystems Rauch detektiert wird. Es sei angemerkt, dass die Mehrzahl der Bilder sukzessive oder gleichzeitig durch das maschinelle Lernsystem propagiert werden können.

Zusätzlich kann abhängig von der Ausgangsgröße des maschinellen Lernsystem ausgegeben werden, ob Rauch innerhalb des Bildes abgebildet ist. Denkbar ist auch, dass abhängig von der Ausgangsgröße eine Intensität, oder Menge und/oder Dichte des Rauches ermittelt wird und ggf. ausgegeben wird.

Es sei angemerkt, dass das maschinelle Lernsystem des ersten Aspektes der Erfindung mit all seinen unterschiedlichen Ausführungsformen für den zweiten Aspekt der Erfindung verwendet werden kann.

Es sei angemerkt, dass die Bilder des ersten und zweiten Aspektes z.B. RGB-Bilder, Grauwert-Bilder, Fluss-Bilder oder Bilddifferenzen sein können, die mit einer Fotokamera oder einer Videokamera erfasst werden. Weiterhin wird vorgeschlagen, dass die Bilder mit zusätzlichen Informationen, bzw. optischer Fluss, alternativ Bilddifferenzen, angereichert sind. Dies hat den Vorteil, dass damit noch zuverlässiger und genauer Rauch detektiert werden kann.

Weiterhin wird vorgeschlagen, dass das maschinelle Lernsystem abhängig von einer Mehrzahl von Trainingsdaten, umfassend Trainingsbilder und jeweils zugeordnete Ausgangsgrößen, angelernt wird. Beim Anlernen werden die Trainingsbilder durch das maschinelle Lernsystem propagiert. Abhängig von den ermittelten Ausgangsgrößen des maschinellen Lernsystems und den jeweils zugeordneten Ausgangsgrößen der Trainingsbilder wird eine Parametrisierung des maschinellen Lernsystems derart angepasst, dass eine Abweichung zwischen den ermittelten Ausgangsgrößen und den Trainingsausgangsgrößen minimal wird.

Vorzugsweise wird das Minimieren, insbesondere optimieren, der Abweichung mittels eines Gradientenabstiegsverfahren, bspw. backpropagation-through-time, durchgeführt. Die Abweichung kann eine Differenz sein. Die Abweichung kann mittels eines math. Abstandsmaß ermittelt werden.

Weiterhin wird vorgeschlagen, dass die Trainingsbilder Bilder umfasst, die nur Bilder mit und ohne Rauch enthalten. Zusätzlich können die Trainingsbilder auch Bilder enthalten, die sowohl neben Rauch auch Flammen, bzw. Feuerstellen zeigen. Dies erlaubt es, das maschinelle Lernsystem des Weiteren anzulernen, Feuer, bzw. einen Brand zu detektieren.

Weiterhin wird vorgeschlagen, dass das maschinelle Lernsystem nach dem Anlernen komprimiert wird, bspw. durch ein sog. Pruning. Der Vorteil ist, dass dies den Einsatz in einem mobilen Endgerät erlaubt.

Weiterhin wird vorgeschlagen, dass abhängig von der ermittelten Größe des maschinellen Lernsystem ein Rauchmelder angesteuert wird.

Zusätzlich oder alternativ kann abhängig von der Ausgangsgröße des maschinellen Lernsystem ein Warnmelder gemäß dem ersten Aspekt angesteuert werden. Der Warnmelder, wie bspw. der Rauchmelder, kann ein Warnsignal ausgeben, dann, wenn abhängig von der Ausgangsgröße des maschinellen Lernsystems Rauch detektiert wurde. Zusätzlich oder alternativ können die oben genannten weiteren Systeme gemäß dem ersten Aspekt der Erfindung angesteuert, bzw. der Alarm oder die Alarmentscheidung diesen Systemen bereitgestellt werden. In einem weiteren Aspekt wird ein Computerprogramm vorgeschlagen. Das Computerprogramm ist eingerichtet, eines der vorherigen genannten Verfahren auszuführen. Das Computerprogramm umfasst Anweisungen, die einen Computer veranlassen, eines dieser genannten Verfahren mit all seinen Schritten auszuführen, wenn das Computerprogramm auf dem Computer abläuft. Ferner wird ein maschinenlesbares Speichermodul vorgeschlagen, auf welchem das Computerprogramm gespeichert ist. Des Weiteren wird eine Vorrichtung vorgeschlagen, die eingerichtet ist eines der Verfahren auszuführen.

Nachfolgend werden Ausführungsformen der Erfindung unter Bezugnahme auf die beiliegenden Zeichnungen näher erläutert. Dabei zeigt:
- Figur 1: einen schematischen Aufbau einer Vorrichtung zur Detektion von Rauch;
- Figur 2: eine schematische Darstellung eines maschinellen Lernsystems, welches parametrisiert ist, Rauch zu detektieren;
- Figur 3: eine schematische Darstellung eines Flussdiagramms eines Verfahrens zur Detektion von Rauch mittels des maschinellen Lernsystems;
- Figur 4: eine schematische Darstellung einer Vorrichtung, welche zum Anlernen des maschinellen Lernsystems verwendet werden kann.

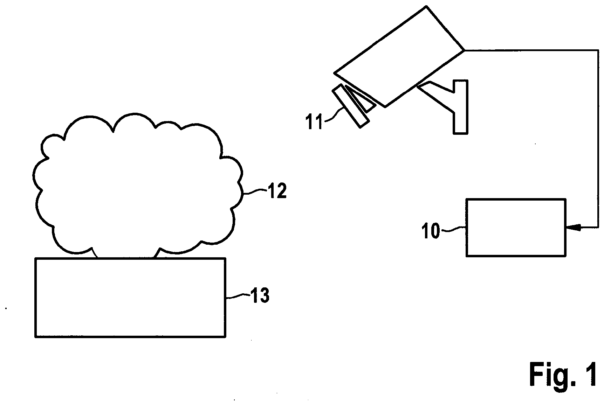

Figur 1 zeigt eine beispielhafte Ausführungsform einer Vorrichtung zum Detektieren von Rauch (12). Die Vorrichtung umfasst in dieser Ausführungsform eine Kamera (11), die mit einem maschinellen Lernsystem (10) verbunden ist. Die Kamera (11) erfasst eine Mehrzahl von Bildern einer Umgebung der Kamera (11). Tritt beispielsweise eine Rauchentwicklung in der Umgebung der Kamera (11) auf, weil ein Objekt (13) brennt oder überhitzt, enthalten die Bilder der Kamera Rauch (12). Die Mehrzahl der Bilder der Kamera werden durch das maschinelle Lernsystem (10) nacheinander verarbeitet. Das maschinelle Lernsystem (10) ist derart parametrisiert, dass dieses abhängig von den nacheinander verarbeiteten Bildern, jeweils eine Ausgangsgröße ausgibt, die charakterisiert, ob innerhalb des jeweiligen Bildes Rauch (12) abgebildet ist. Abhängig von einer oder einer Mehrzahl der Ausgangsgrößen des maschinellen Lernsystem kann der Rauch detektiert werden.

In einer weiteren Ausführungsform der Vorrichtung ist das maschinelle Lernsystem (10) beispielsweise mit einem Rauchmelder verbunden. Der Rauchmelder bestimmt abhängig von der Ausgangsgröße des maschinellen Lernsystems, ob dieser ein Alarm auslösen soll.

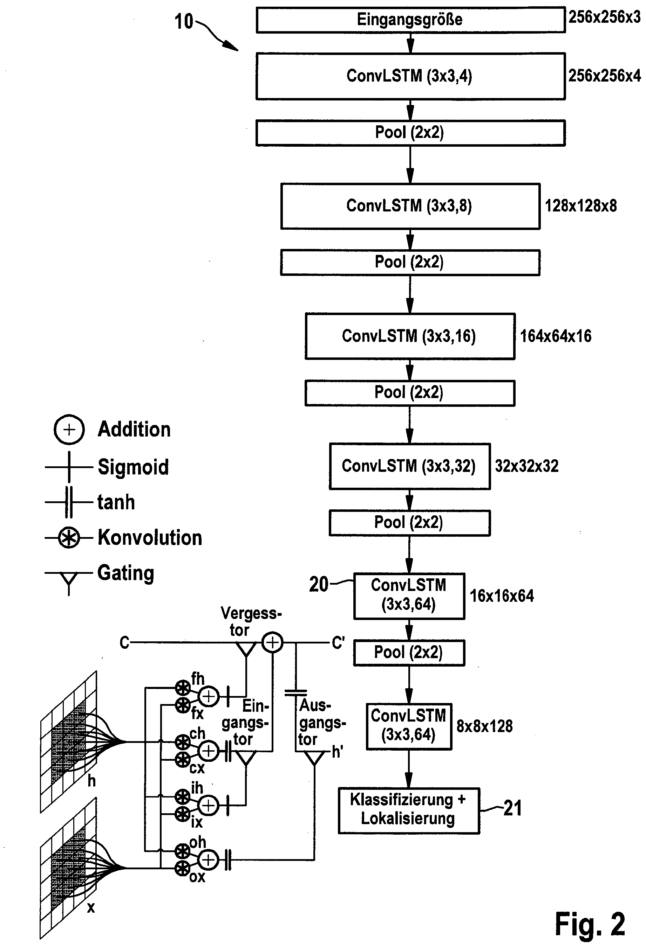

Figur 2 zeigt schematisch einen Aufbau des maschinellen Lernsystems (10). In Figur 2 ist das maschinelle Lernsystem (10) beispielhaft durch ein neuronales Netz gegeben. In der abgebildeten Ausführungsform in Figur 2 umfasst das maschinelle Lernsystem (10) eine Mehrzahl von Schichten, die nach einer vorgebbaren Reihenfolge miteinander verbunden sind. Die Schichten sind entweder ConvLSTM (20) oder Poolingschichten, die z.B. ein average-/max-pooling durchführen. Die Reihenfolge ist in Figur 2 dergestalt, dass nach einem jeden ConvLSTM (20) eine Poolingschicht folgt. Zusätzlich kann die letzte Schicht des maschinelle Lernsystem (10) mit einem vollvermaschten neuronalen Netz (21) verbunden sein. Vorzugsweise ist das vollvermaschte neuronale Netz (21) ein Klassifikator, der eine Klassifikation ausgibt, ob in dem durch das maschinelle Lernsystem (10) verarbeitete Bild Rauch enthalten ist. Alternativ kann das vollvermaschte neuronale Netz eine Matrix ausgeben, deren Einträge jeweils einem Ausschnitt einer Mehrzahl von Ausschnitten des verarbeiteten Bildes zugeordnet sind und die Einträge jeweils charakterisieren, ob innerhalb des jeweiligen Ausschnittes Rauch abgebildet ist. Dies entspricht dann einer Lokalisierung des Rauches innerhalb des Bildes.

Ferner ist in Figur 2 beispielhaft oberhalb derer jeweiligen Schichten notiert, welche Auflösungen die Eingangsgrößen der Schichten aufweisen. Die Eingangsgröße (Figur 2:"input frame") des maschinellen Lernsystems (10), also das Bild, welches durch das maschinelle Lernsystem (10) verarbeitet wird, hat in dieser Ausführungsform eine Auflösung von 256x256x3. Ebenso ist beispielhaft dargestellt wie die jeweiligen Schichten konfiguriert sind. Zum Beispiel ist die erste ConvLSTM Schicht durch 4 Filter, die jeweils eine Auflösung von 3x3 haben, konfiguriert.

Ferner zeigt Figur 2 schematisch einen Aufbau des ConvLSTM (20).

Das ConvLSTM (20) erhält drei unterschiedliche Eingangsgrößen (x,h,c). Abhängig von diesen drei Eingangsgrößen (x,h,c) ermittelt das ConvLSTM (20) zwei Ausgangsgrößen (c`,h`). Eine erste Eingangsgröße (x) ist die Eingangsgröße der jeweiligen ConvLSTM Schicht bzw. das Bild. Eine zweite Eingangsgröße (h) ist eine vorhergehend ermitteltet Ausgangsgröße des ConvLSTM (20) zu einem, insbesondere unmittelbar vorhergehenden, Verarbeitungs-/Zeit-schritt. D.h. diese ermittelte Ausgangsgröße enthält Informationen der vorhergehenden verarbeiteten Eingangsgrößen dieses ConvLSTM. Eine dritte Eingangsgröße (c) ist ein interner Zustand des ConvLSTM (20), der abhängig von der ersten und zweiten Eingangsgröße (x,h) aktualisiert wird, insbesondere zu jedem Verarbeitungs-/Zeit-schritt.

Um die zwei Ausgangsgrößen (h`,c`) zu ermitteln, wird jeweils die erste und zweite Eingangsgröße mittels unterschiedlicher Filter (fh,fx,ch,cx,ih,ix,oh,ox) gefiltert und entsprechend der dargestellten Verbindungen in Figur 2 aufsummiert. Anschließend wird auf die jeweiligen summierten Ergebnisse eine Aktivierungsfunktion angewendet. Die Aktivierungsfunktion ist beispielhaft in Figur 2 durch eine Sigmoid-/tanh-Funktion gegeben.

Anschließend werden die Ergebnisse der Aktivierungsfunktionen gemäß den dargestellten Verbindungen in Figur 2 in sogenannten input gate, forget gate und output gate zu den Ausgangsgrößen (c`,h`) verarbeitet.

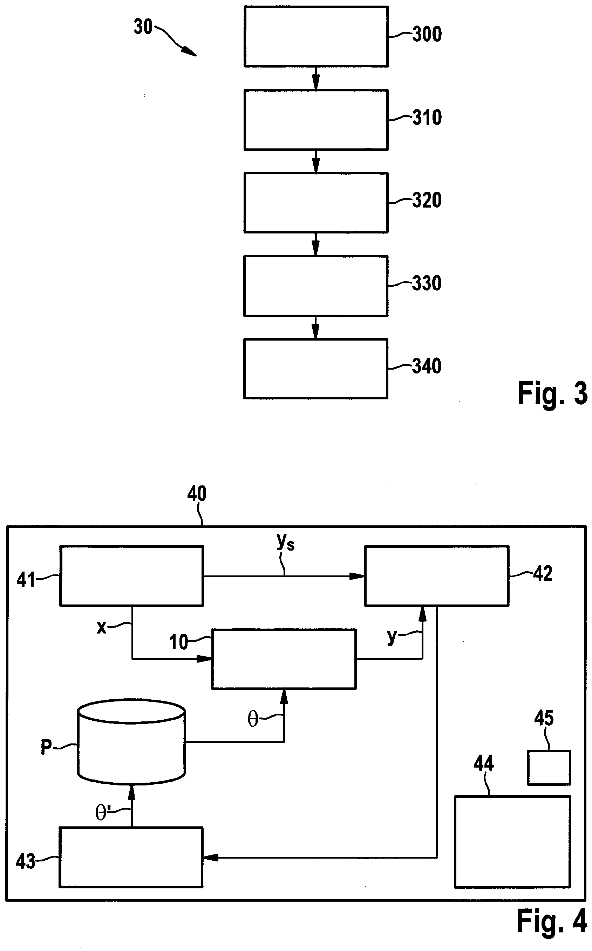

Figur 3 zeigt schematisch ein Flussdiagramm (30) eines Verfahrens zur Detektion von Rauch.

Das Verfahren beginnt mit Schritt 300. In diesem Schritt erhält das maschinelle Lernsystem (10) die Mehrzahl der nacheinander erfassten Bilder der Kamera (11).

Im darauffolgenden Schritt 310 werden die einzelnen Bilder nacheinander durch das maschinelle Lernsystem (10) propagiert.

Im Schritt 320 gibt das maschinelle Lernsystem (10) jeweils eine Ausgangsgröße aus, nachdem jedes der Bilder durch das maschinelle Lernsystem propagiert wurde.

Im nachfolgenden Schritt 330 kann dann abhängig von den ausgegebenen Ausgangsgrößen des maschinellen Lernsystems (10) entschieden werden, ob Rauch in der Umgebung der Kamera vorhanden ist. Dies kann beispielsweise durchgeführt werden, indem die Ausgangsgröße des maschinellen Lernsystems mit einem Schwellwert verglichen wird. Ist die Ausgangsgröße größer als der Schwellwert, kann entschieden werden, dass Rauch vorhanden ist.

Optional kann nach Beendigung des Schrittes 330, Schritt 340 ausgeführt werden. Hierin wird abhängig von dem Ergebnis des Schrittes 330 ein Rauchmelder angesteuert. Beispielsweise kann der Rauchmelder ein Warnsignal, wie ein Warnton, ausgeben, wenn die Ausgangsgröße des maschinellen Lernsystem den Schwellwert überschritten hat.

In einer weiteren Ausführungsform des Verfahrens zum Detektieren von Rauch kann das maschinelle Lernsystem (10) vor Ausführen des Schrittes 300 angelernt werden.

Beim Anlernen des maschinellen Lernsystems (10) wird mittels eines Optimierungsverfahrens, vorzugsweise eines Gradiententabstiegsverfahrens, wie z.B. backpropagation-through-time, eine Parametrisierung des maschinellen Lernsystems hinsichtlich einer Kostenfunktion (engl. loss function) optimiert. Die Kostenfunktion charakterisiert eine Differenz zwischen ermittelten Ausgangsgrößen und breitgestellten Trainingsausgangsgrößen abhängig von der Parametrisierung. Zur Optimierung der Parametrisierung können Gradienten mittels des Gradientenabstiegsverfahren ermittelt werden, wobei dann die Parametrisierung abhängig von den ermittelten Gradienten angepasst wird.

Zum Anlernen werden Trainingsdaten bereitgestellt, die Trainingsbilder enthalten, abhängig von diesen ermittelt das maschinelle Lernsystem die Ausgangsgrö-ßen. Ferner sind zu den Trainingsbildern jeweils die Trainingsausgangsgrößen zugeordnet.

Der Schritt des Anlernens kann mehrfach hintereinander ausgeführt werden, bis ein vorgebbares Abbruchkriterium erfüllt ist, bspw. bis die Differenz oder eine Änderung dieser Differenz kleiner als ein vorgebbarer Wert ist.

Figur 4 zeigt eine schematische Darstellung einer Vorrichtung (40) zum Anlernen des maschinellen Lernsystems (10). Die Vorrichtung (40) umfasst eine Datenbank (41) welche Trainingsdaten enthält. Die Trainingsdaten umfassen gelabelte Bilder (x), deren Label (*yₛ*) charakterisiert, ob innerhalb des Bildes Rauch abgebildet ist. Die Bilder (x) werden durch das maschinelle Lernsystem (10) verarbeitet und als Ausgangsgröße (y) einem Differenzmodul (42) bereitgestellt. Das Differenzmodul (42) erhält ferner die Label (*yₛ*) und ermittelt abhängig von den Label (*yₛ*) und abhängig von den Ausgangsgrößen (y) eine Differenz, die daraufhin an das Anpassungsmodul (43) weitergereicht wird. Das Anpassungsmodul ermittelt dann abhängig von der Differenz eine Änderung (*θ'*) der Parametrisierung (*θ*) des maschinellen Lernsystems (10). Daraufhin wird die Parametrisierung (*θ*) abhängig von der Änderung (*θ*') in einem Speicher (P) angepasst.

Ferner kann die Vorrichtung (40) eine Recheneinheit (44) und ein Speicherelement (45) umfassen.

## Patentansprüche

1. Maschinelles Lernsystem (10), welches parametrisiert ist, abhängig von aufeinanderfolgenden Bildern einer Sequenz von Bildern, insbesondere Videoframes, in den Bildern Rauch (12) zu detektieren,
wobei das maschinelle Lernsystem (10) ein faltendes LongShortTermMemory (ConvLSTM)-Modul (20) umfasst.

2. Maschinelles Lernsystem (10) nach Anspruch 1, welches des Weiteren parametrisiert ist, eine Ausgangsgröße auszugeben, die charakterisiert, ob innerhalb der Bilder Rauch (12) abgebildet ist.

3. Maschinelles Lernsystem (10) nach Anspruch 1 oder 2, welches parametrisiert ist, abhängig von jeweils den einzelnen Bildern als Ausgangsgröße jeweils eine Matrix auszugeben,
wobei die Einträge der Matrix jeweils einem Ausschnitt aus einer vorgebbaren Mehrzahl von Ausschnitten des jeweiligen Bildes zugeordnet sind, und wobei die Einträge der Matrix charakterisieren, ob Rauch (12) innerhalb dieses zugeordneten Abschnittes des jeweiligen Bildes abgebildet ist.

4. Maschinelles Lernsystem (10) nach einem der vorhergehenden Ansprüche, welches eine Mehrzahl von hintereinander geschalteten ConvLSTM -Modulen (20) umfasst,
wobei eine Anzahl von Filtern, die das jeweilige ConvLSTM -Modul (20) umfasst, mit zunehmender Tiefe einer Position des jeweiligen ConvLSTM -Moduls zunimmt und insbesondere eine Auflösung des Bildes, welches durch das maschinelle Lernsystem propagiert wird, mit zunehmender Tiefe der Position des jeweiligen _ConvLSTM -Moduls abnimmt,
wobei zwischen den ConvLSTM -Modulen (20) jeweils eine Verwerfungsschicht zwischengeschaltet ist,
wobei das letzte ConvLSTM -Modul (20) der Mehrzahl der hintereinander geschalteten ConvLSTM -Module (20) mit einem vollvermaschten neuronalen Netz verbunden ist, welches parametrisiert ist, die Ausgangsgröße des maschinellen Lernsystem (10) auszugeben.

5. Maschinelles Lernsystem (10) nach einem der vorhergehenden Ansprüche, mit einem Eingang, wobei der Eingang eingerichtet ist, die von einer Kamera erfasste Mehrzahl an Bildern dem maschinellen Lernsystem (10) bereitzustellen.

6. Verfahren zur Detektion von Rauch (12) innerhalb eines Bildes mittels eines maschinellen Lernsystems (10), welches parametrisiert ist, abhängig von einer Mehrzahl von, insbesondere unmittelbar, nacheinander erfassten Bildern in den Bildern Rauch (12) zu detektieren,
wobei das maschinelle Lernsystem (10), insbesondere ein neuronales Netz, eine Mehrzahl von Schichten, die nach einer vorgegebenen Reihenfolge verbunden sind, umfasst und wenigstens eine der Schichten das faltende LongShortTermMemory(ConvLSTM)-Modul (20), umfasst, umfassend folgende Schritte:
- Erhalten einer Mehrzahl von, insbesondere unmittelbar, nacheinander erfassten Bildern;
- Propagieren der Mehrzahl der erfassten Bilder nacheinander durch das maschinelle Lernsystem (10),
wobei beim Propagieren die Bilder sukzessive durch die Schichten des maschinelle Lernsystems (10) verarbeitet werden und die letzte Schicht der Reihenfolge der Schichten die Ausgangsgröße ausgibt.

7. Verfahren nach Anspruch 6, wobei das maschinelle Lernsystem (10) abhängig von einer Mehrzahl von Trainingsdaten, umfassend Trainingsbilder (x) und jeweils zugeordnete Trainingsausgangsgrößen (*yₛ*), angelernt wird, wobei beim Anlernen die Trainingsbilder (x) durch das maschinelle Lernsystem (10) propagiert und abhängig von den ermittelten Ausgangsgrößen des maschinellen Lernsystems (10) und den jeweils zugeordneten Trainingsausgangsgrößen der Trainingsbilder eine Parametrisierung des maschinellen Lernsystems (10) derart angepasst wird, dass eine Abweichung zwischen den ermittelten Ausgangsgrößen und den Trainingsausgangsgrößen minimal wird.

8. Verfahren nach einem der Ansprüche 6 oder 7, wobei abhängig von der ermittelten Ausgangsgröße des maschinellen Lernsystem (10) ein Rauchmelder angesteuert wird.

9. Computerprogramm, welches Befehle umfasst, die eingerichtet sind, wenn die Befehle auf einem Computer ausgeführt werden, den Computer zu veranlassen, das Verfahren nach einem der Ansprüche 6 bis 8 auszuführen.

10. Maschinenlesbares Speicherelement, auf welchem das Computerprogramm nach Anspruch 9 hinterlegt ist.

## Claims

1. Machine learning system (10), which is parameterized, on the basis of successive images of a sequence of images, in particular video frames, to detect smoke (12) in the images,
wherein the machine learning system (10) comprises a convolutional Long Short Term Memory (ConvLSTM) module (20).

2. Machine learning system (10) according to Claim 1, which is further parameterized to output an output variable that characterizes whether smoke (12) is represented within the images.

3. Machine learning system (10) according to Claim 1 or 2, which is parameterized, on the basis of each of the individual images, to output a matrix as the output variable in each case,
wherein the elements of the matrix are each assigned to a section of a predefin-able plurality of sections of the respective image, and wherein the elements of the matrix characterize whether smoke (12) is represented within this assigned section of the respective image.

4. Machine learning system (10) according to one of the preceding claims, which comprises a plurality of concatenated ConvLSTM modules (20),
wherein a number of filters that the respective ConvLSTM module (20) comprises increases with increasing depth of a position of the respective ConvLSTM module, and in particular a resolution of the image propagated through the machine learning system decreases with increasing depth of the position of the respective ConvLSTM module,
wherein a pooling layer is positioned between each of the ConvLSTM modules (20),
wherein the final ConvLSTM module (20) of the plurality of the concatenated ConvLSTM modules (20) is connected to a fully connected neural network, which is parameterized to output the output variable of the machine learning system (10).

5. Machine learning system (10) according to one of the preceding claims, with an input, wherein the input is configured to provide the plurality of images captured by a camera to the machine learning system (10).

6. Method for detecting smoke (12) within an image by means of a machine learning system (10), which is parameterized, on the basis of a plurality of images, captured in particular in direct succession, to detect smoke (12) in the images,
wherein the machine learning system (10), in particular a neural network, comprises a plurality of layers connected in a specified sequence and at least one of the layers comprises the convolutional Long Short Term Memory (ConvLSTM) module (20), said method comprising the following steps:
- obtaining a plurality of images, captured in particular in direct succession;
- propagating the plurality of the captured images through the machine learning system (10) in succession,
wherein, during the propagation, the images are processed successively by the layers of the machine learning system (10) and the final layer of the sequence of layers outputs the output variable.

7. Method according to Claim 6, wherein the machine learning system (10) is trained on the basis of a plurality of training data, comprising training images (x) and respectively assigned training output variables (*yₛ*),
wherein the training images (x) are propagated through the machine learning system (10) during the training and, on the basis of the determined output variables of the machine learning system (10) and the respectively assigned training output variables of the training images, a parameterization of the machine learning system (10) is adjusted in such a way that a deviation between the determined output variables and the training output variables becomes minimal.

8. Method according to either of Claims 6 and 7, wherein a smoke detector is activated on the basis of the determined output variable of the machine learning system (10).

9. Computer program that comprises commands which are configured, when they are executed on a computer, to cause said computer to execute the method according to one of Claims 6 to 8.

10. Machine-readable storage element, on which the computer program according to Claim 9 is stored.

## Revendications

1. Système d'apprentissage automatique (10), qui est paramétré pour, en fonction d'images successives d'une séquence d'images, en particulier de trames vidéo, détecter de la fumée (12) dans les images,
le système d'apprentissage automatique (10) comprenant un module (20) de mémoire convolutive à long terme (« LongShortTerm », ConvLSTM).

2. Système d'apprentissage automatique (10) selon la revendication 1, qui est en outre paramétré pour émettre une grandeur de sortie qui caractérise la représentation de fumée (12) à l'intérieur des images.

3. Système d'apprentissage automatique (10) selon la revendication 1 ou la revendication 2, qui est paramétré pour délivrer respectivement une matrice en fonction des différentes images en tant que grandeur de sortie,
les entrées de la matrice étant respectivement associées à un extrait d'une pluralité prédéfinissable d'extraits de l'image respective, et les entrées de la matrice caractérisant la représentation de fumée (12) à l'intérieur de cet extrait associé de l'image respective.

4. Système d'apprentissage automatique (10) selon l'une des revendications précédentes, qui comprend une pluralité de modules ConvLSTM (20) connectés en série,
un nombre de filtres que comprend le module ConvLSTM (20) respectif augmentant avec une profondeur croissante d'une position du module ConvLSTM respectif et, en particulier, une résolution de l'image qui est propagée par le système d'apprentissage automatique, diminuant avec une profondeur croissante de la position du module ConvLSTM respectif,
une couche de rejet étant respectivement intercalée entre les modules ConvLSTM (20),
le dernier module ConvLSTM (20) de la pluralité des modules ConvLSTM (20) connectés les uns derrière les autres étant relié à un réseau neuronal entièrement maillé qui est paramétré de façon à délivrer la grandeur de sortie du système d'apprentissage automatique (10).

5. Système d'apprentissage automatique (10) selon l'une des revendications précédentes, avec une entrée, l'entrée étant configurée pour fournir au système d'apprentissage automatique (10) la pluralité d'images capturées par une caméra.

6. Procédé de détection de fumée (12) à l'intérieur d'une image au moyen d'un système d'apprentissage automatique (10) qui est paramétré pour, en fonction d'une pluralité d'images capturées, en particulier en direct, les unes après les autres, détecter de la fumée (12) dans les images,
le système d'apprentissage automatique (10), en particulier un réseau neuronal, comprenant une pluralité de couches reliées selon un ordre prédéterminé, et au moins l'une des couches comprenant le module de mémoire convolutive à long terme (« LongShortTermMemory », ConvLSTM) (20), comprenant les étapes suivantes :
- obtenir une pluralité d'images capturées, en particulier en direct, les unes après les autres ;
- propager la pluralité d'images capturées les unes après les autres par le système d'apprentissage automatique (10),
les images, lors de la propagation, étant traitées successivement par les couches du système d'apprentissage automatique (10) et la dernière couche de la séquence des couches délivrant la grandeur de sortie.

7. Procédé selon la revendication 6, dans lequel le système d'apprentissage automatique (10) reçoit un apprentissage à partir d'une pluralité de données d'apprentissage, comprenant des images d'apprentissage (x) et des grandeurs de sortie d'apprentissage (*yₛ*) respectivement associées,
les images d'apprentissage (x), lors de l'apprentissage, étant propagées par le système d'apprentissage automatique (10) et, en fonction des grandeurs de sortie déterminées du système d'apprentissage automatique (10) et des grandeurs de sortie d'apprentissage, respectivement associées, des images d'apprentissage, un paramétrage du système d'apprentissage automatique (10) étant ajusté de telle sorte qu'un écart entre les grandeurs de sortie déterminées et les grandeurs de sortie d'apprentissage devient minimal.

8. Procédé selon l'une des revendications 6 ou 7, dans lequel un détecteur de fumée est commandé en fonction de la grandeur de sortie déterminée du système d'apprentissage automatique (10).

9. Programme d'ordinateur, comprenant des instructions conçues pour, lorsque les instructions sont exécutées sur un ordinateur, amener l'ordinateur à mettre en oeuvre le procédé selon l'une des revendications 6 à 8.

10. Élément de stockage lisible par machine, sur lequel est stocké un programme informatique selon la revendication 9.
